# EUROPÄISCHE PATENTSCHRIFT

(11) **EP 2 558 310 B1**
(45) Veröffentlichungstag und Bekanntmachung des Hinweises auf die Patenterteilung: **13.08.2014**
(21) Anmeldenummer: 11703220.1
(22) Anmeldetag: 14.02.2011
(51) Int. Cl.: B60C 11/04

(54) **FAHRZEUGLUFTREIFEN FÜR NUTZFAHRZEUGE**
PNEUMATIC TYRE FOR UTILITY VEHICLE
PNEUMATIC POUR VÉHICULE UTILITAIRE

(30) Priorität: 16.04.2010 DE 102010016469
(43) Veröffentlichungstag der Anmeldung: 20.02.2013
(73) Patentinhaber: Continental Reifen Deutschland GmbH, 30165 Hannover (DE)
(72) Erfinder: KLEFFMANN, Jens, 30167 Hannover (DE); MARQUES, Pedro-Soares, 30169 Hannover (DE)
(74) Vertreter: Finger, Karsten
(86) Internationale Anmeldenummer: PCT/EP2011/052096
(87) Internationale Veröffentlichungsnummer: WO 2011/128126

(56) Entgegenhaltungen:
- JP-A- 60 082 407
- JP-A- 2009 143 301
- US-A- 3 254 693

## Beschreibung

Die Erfindung betrifft einen Fahrzeugluftreifen für Nutzfahrzeuge mit einem Laufstreifen mit in Umfangsrichtung verlaufenden Umfangsrillen, welche den Laufstreifen in Umfangsrippen gliedern, wobei eine parallel zur Laufstreifenperipherie im Laufstreifen verlaufende, die tiefste(n) Umfangsrille(n) von radial innen berührende Einhüllende gemeinsam mit der Laufstreifenperipherie und schulterseitigen Flankenabschnitten ein Laufstreifen-Bruttovolumen definiert und sämtliche Rillen im Laufstreifen ein Rillenvolumen definieren. Sämtliche Rillen im Laufstreifen definieren ein Rillenvolumen zwischen 5% und 28% des Laufstreifen-Bruttovolumens, wobei drei Umfangsrillen vorgesehen sind, die derart über die axiale Breite des Laufstreifens angeordnet sind, wobei die erste Umfangsrille im Bereich der einen Kante der breitesten Gürtellage, die zweite Umfangsrille im Bereich der anderen Kante der breitesten Gürtellage des Gürtels und die dritte Umfangsrille zwischen der ersten Umfangsrille und der zweiten Umfangsrille im Laufstreifen angeordnet ist und wobei die erste und die zweite Umfangsrille jeweils ein Rillenvolumen zwischen 1,25% und 7,00% des Laufstreifen-Bruttovolumens aufweisen und die dritte Umfangsrille ein wenigstens doppelt so großes Rillenvolumen der ersten oder der zweiten Umfangsrille aufweist.

Ein Reifen der eingangs genannten Art ist beispielsweise aus der US 3 254 693 A bekannt.

Aus der US 5,535,798 B ist ein Reifen mit einem gleichförmigen Abrieb des Laufstreifens bekannt, wobei dieser Laufstreifen durch vier in Umfangsrichtung umlaufende breite Umfangsrillen in Umfangsrippen gegliedert ist, wobei in den beiden schulterseitigen Umfangsrippen nahe der Laufstreifenränder jeweils eine weitere schmale und in Umfangsrichtung umlaufende Umfangsrille vorgesehen ist. Die breiten Umfangsrillen sind durch Nutflankenflächen begrenzt, welche mit Vertiefungen versehen sind, die das Negativ dreiseitiger Pyramiden sind, deren Spitzen der Laufstreifenperipherie zugewandt sind.

Um den Rollwiderstand von Fahrzeugluftreifen zu senken, ist bereits eine Vielzahl von Maßnahmen vorgeschlagen worden, beispielsweise eine Reduktion der Profiltiefe oder eine Verringerung der Laufstreifenbreite. Diese Maßnahmen zielen darauf ab, das beim Abrollen zu deformierende Gummivolumen zu reduzieren. Darüber hinaus verringern spezielle Laufstreifencompounds den Rollwiderstand, beispielsweise solche, die einen geringen Füllstoffanteil aufweisen.

Eine Vielzahl von veröffentlichten Patentanmeldungen und Patenten befasst sich mit dem Thema, den Rollwiderstand von Nutzfahrzeugreifen zu senken, um den Kraftstoffverbrauch eines Fahrzeuges zu reduzieren. So ist beispielsweise aus der EP 0 973 652 B 1 ein Reifen für LKW-Antriebsräder bekannt, dessen Laufstreifen zur Verringerung des Rollwiderstandes in Blöcke gegliedert ist, welche von Schlitzen axial durchsetzt sind. Die Blöcke sind ferner durch Quernuten voneinander getrennt, welche jeweils mit weiteren Schlitzen versehen sind. Darüber hinaus ist eine Vielzahl von Längsschlitzen vorgesehen.

In der bisher nicht veröffentlichten europäischen Patentanmeldung 09169199.8 der Anmelderin wird zur Reduzierung des Rollwiderstandes vorgeschlagen, das Rillenvolumen im Laufstreifen zugunsten einer Erhöhung des Gummivolumens des Laufstreifens zu verringern. Die Verringerung des Rillenvolumens erfolgt beispielsweise durch die Anordnung schmalerer oder einer geringeren Anzahl an Umfangsrillen. Es hat sich überraschenderweise entgegen der bisherigen Meinung der Fachwelt gezeigt, dass eine Erhöhung des Gummivolumens im Laufstreifen der Rollwiderstandes merklich reduziert. Es hat sich gezeigt, dass sich bei einem geringen Rillenvolumen die Profilsteifigkeit in radialer Richtung derart erhöht, dass die Deformationsamplitude des Laufstreifens in einem Ausmaß reduziert wird, welches eine Überkompensation des zu erwartenden Effektes - Verschlechterung des Rollwiderstandes durch mehr vorhandenen Gummi-bewirkt. Der Rollwiderstand des Reifens ist somit gesenkt, wobei die gegenüber einem nach dem Stand der Technik ausgeführten Reifen erzielbare Senkung des Rollwiderstandes signifikant sein kann, je nach dem Anteil des Rillenvolumens.

Durch diese vorbeschriebene rollwiderstandsverbessernde Maßnahme ist die Länge und Breite der Bodenaufstandsfläche des Reifens nur unwesentlich verändert. Die Kontaktfläche zwischen Reifen und Straße ist bei reduziertem Rillenvolumen, aber etwa gleicher Bodenaufstandsfläche, vergrößert, wodurch die radiale Flächenpressung in der Bodenaufstandsfläche pro Flächeneinheit gesenkt ist. Eine hohe radiale Flächenpressung in der Bodenaufstandsfläche ist aber erwünscht, um beispielsweise ein gutes Reifenhandling bei unterschiedlichen Fahrbahnbedingungen zu erreichen. Es kann sich bei der profilbasierten Optimierung des Rollwiderstandes durch weniger Rillenvolumen ein Zielkonflikt bezüglich des Reifenhandlings ergeben.

Der Erfindung liegt die Aufgabe zugrunde, den Rollwiderstand eines Nutzfahrzeugreifens wirkungsvoll durch profilbasierte Maßnahmen zu senken, ohne dass negative Auswirkungen auf andere Laufstreifeneigenschaften, insbesondere das Reifenhandling, den Abrieb sowie die Lebenserwartung des Reifens zu erwarten sind.

Gelöst wird die gestellte Aufgabe erfindungsgemäß dadurch, dass der Laufstreifen axial innen und axial außen je eine weitere über den Umfang umlaufende nutartige Ausnehmung aufweist, die derart angeordnet sind, dass die Breite der Bodenaufstandsfläche in axialer Richtung verringert ist.

"Erste bzw. zweite Umfangsrille im Bereich einer Kante der breitesten Gürtellage" meint einen sich axial erstreckenden Bereich im Laufstreifen, in dem die erste bzw. die zweite Umfangsrille vollständig oder zumindest teilweise angeordnet ist. Der sich axial erstreckende Bereich beginnt an der zur Umfangsrille nächstliegenden Kante der breitesten Gürtellage (in radialer Richtung projiziert) und erstreckt sich in axialer Richtung zur Laufstreifenmitte von dieser maximal 100mm.

Bei der Erfindung wird die Erkenntnis der Reduzierung des Rollwiderstandes durch eine Erhöhung des Gummivolumens im Laufstreifen mit der überraschenden Erkenntnis kombiniert, dass der Rollwiderstand ebenfalls durch eine verringerte Anzahl an Umfangsrillen, mit der zwangsläufig eine verringerte Anzahl an freien Rillenflanken einhergeht und von zudem ungleichmäßig breit gestalteten und besonders verteilten Umfangsrillen, verringerbar ist.
Es hat sich herausgestellt, dass sich bei einem Rillenvolumen von bis zu 28% des Bruttovolumens die Profilsteifigkeit in radialer Richtung derart erhöht, dass die Deformationsamplitude des Laufstreifens in einem Ausmaß reduziert wird, welches eine Überkompensation des zu erwartenden Effektes - Verschlechterung des Rollwiderstandes durch mehr vorhandenen Gummi -bewirkt. Die Kombination von geringem Rillenvolumen bei entsprechend erhöhtem Gummivolumen mit einer reduzierter Anzahl an ungleichmäßig breiten Umfangsrillen und somit einer Verringerung an frei beweglichen Rillenflanken in o.g. Anordnung und Ausbildung der Umfangsrillen hat sich als besonders vorteilhaft für eine Reduktion des Rollwiderstandes bei dennoch guten Handling-Eigenschaften für verschiedene Fahrbahnbedingungen herausgestellt.

Neben den drei Umfangsrillen können noch beliebig viele weitere Rillen in Umfangsrichtung angeordnet sein, deren Rillenvolumen jeweils kleiner als 1,25% ist. Diese weiteren Rillen in Umfangsrillen werden in dieser Anmeldung "weitere Umfangsrillen" genannt. Es können ebenfalls oder alternativ beliebig viele und beliebig breite Querrillen im Laufstreifen angeordnet sein.

Nachdem der Anteil des Rillenvolumens die erzielbare Reduktion des Rollwiderstandes sowie die Handlingeigenschaften des Reifens beeinflusst, hat es sich als vorteilhaft herausgestellt, wenn der Anteil des Rillenvolumens am Bruttovolumen zwischen 10% und 20%, besonders vorteilhaft zwischen 13% und 15%, beträgt. Bei dem hier beschriebenen Rillenvolumen ist sichergestellt, dass eine hinreichend hohe radiale Flächenpressung zwischen Reifen und Fahrbahn in der Bodenaufstandsfläche vorliegt, was die Handlingeigenschaften für verschiedene Fahrbahnbedingungen sicherstellt.

Nachdem die Anordnung und Ausbildung der drei Umfangsrillen die erzielbare Reduktion des Rollwiderstandes sowie die Handlingeigenschaften des Reifens beeinflusst, hat es sich als vorteilhaft herausgestellt, wenn die dritte (mittige) Umfangsrille an der Laufstreifenperipherie wenigstens das dreifache Rillenvolumen, bevorzugt das vierfache, besonders bevorzugt das fünffache Rillenvolumen der ersten (oder der zweiten) Umfangsrille aufweist.

Die Lebenserwartung des Reifens ist besonders hoch, wenn die Rillentiefe einer Umfangsrille, vorzugsweise jeder Umfangsrille, zwischen 10mm und 25mm beträgt, wobei die Tiefe aller Umfangsrillen gleich oder auch unterschiedlich sein kann.

Vorteilhaft ist es, wenn wenigstens eine Umfangsrille eine Zick-zack-Geometrie mit in axialer Richtung ausgelenkten Amplituden aufweist, was zusätzlich zu einer Verbesserung der Handlingeigenschaften führt.

Erfindungsgemäße Laufstreifen können in den Umfangsrippen Querrillen, Einschnitte und dergleichen aufweisen, deren "Luftvolumen" zum Rillenvolumen beiträgt.

Weitere Merkmale, Vorteile und Einzelheiten der Erfindung werden nun anhand der Zeichnungen, die schematische Ausführungsbeispiele darstellen, näher beschrieben. Dabei zeigen die:
Fig. 1 einen Querschnitt durch eine Ausführungsform des Laufstreifens eines Referenzreifens;
Fig. 2 einen Querschnitt durch eine Ausführungsform des Laufstreifens eines ausgeführten Nutzfahrzeugreifens ohne erfindungsgemäße nutartige Ausnehmungen;
Fig. 3 einen Querschnitt durch den Laufstreifens des erfindungsgemäß ausgeführten Nutzfahrzeugreifens.

Die Erfindung befasst sich mit einer besonderen Ausführung von Laufstreifen für Nutzfahrzeugreifen, insbesondere LKW-, Bus- und Anhängerreifen. Erfindungsgemäß ausgeführte Reifen sind vorzugsweise für den Einsatz auf der Lenkachse entsprechender Fahrzeuge konzipiert und können den üblichen Aufbau von Radialluftreifen für diese Einsatzzwecke aufweisen. Der Aufbau ist daher weder dargestellt noch beschrieben.

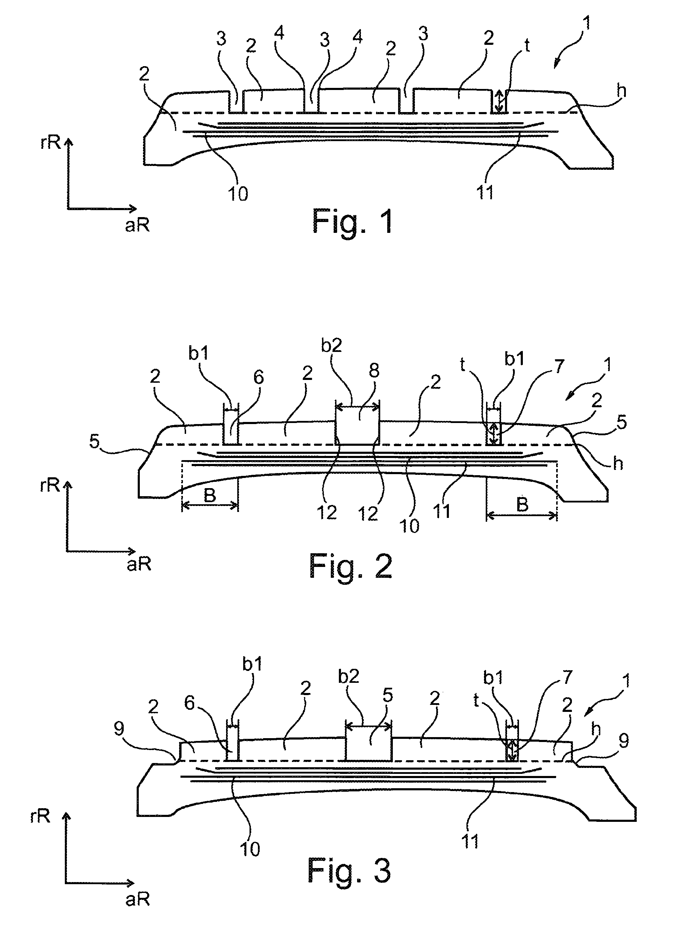

Die **Fig. 1** zeigt eine Ausführungsform eines Laufstreifens 1 eines Referenzreifens (vergl. nachfolgende Tabelle) mit fünf in Umfangsrichtung des Laufstreifens umlaufenden Umfangsrippen 2 von im Wesentlichen übereinstimmender Breite. Der Referenzreifen ist nicht erfindungsgemäß ausgeführt. Die Umfangsrippen 2 sind voneinander durch vier in Umfangsrichtung umlaufende breite Umfangsrillen 3 getrennt, die bei der gezeigten Ausführung sämtlich übereinstimmend mit einem Rillenvolumen von je 3,5% ausgeführt sind. Das Rillenvolumen V_{R} beträgt insgesamt 14% vom Laufstreifenbruttovolumen V. Die maximale Tiefe t₁ der breiten Umfangsrillen 3, die bei der gezeigten Ausführung für sämtliche Umfangsrillen 3 gleich groß gewählt ist, beträgt 15 mm. Parallel zur axialen Außenkontur der Laufstreifenperipherie ist in Fig. 1 eine Hilfslinie h eingezeichnet, welche die breiten Umfangsrillen 3 an ihren radial inneren Enden berührt und derart im Querschnitt eine parallel zur Laufstreifenperipherie in Umfangsrichtung innerhalb des Laufstreifens 1 umlaufende Einhüllende versinnbildlicht.

Die durch die Hilfslinie h versinnbildlichte Einhüllende, die Laufstreifenperipherie und die schulterseitigen Flankenabschnitte 5 des Laufstreifens 1 umschließen ein Bruttovolumen V, welches die Summe des hier befindlichen Gummivolumens und des Rillenvolumens V_{R} ist, welches seinerseits die Summe der "Luftvolumina" sämtlicher breiten Umfangsrillen 3 -zwischen den Rillenbegrenzungen und einer Einhüllenden der Laufstreifenperipherie ermittelt- ist.

Die **Fig. 2** zeigt einen Querschnitt durch eine Ausführungsform des Laufstreifens 1 eines ausgeführten Nutzfahrzeugreifens (vergl. nachfolgende Tabelle "Reifen1"). Der Laufstreifen 1 weist vier in Umfangsrichtung des Laufstreifens umlaufenden Umfangsrippen 2 unterschiedlicher axialer Breite auf. Die Umfangsrippen 2 sind voneinander durch drei in Umfangsrichtung umlaufende Umfangsrillen 6, 7, 8 unterschiedlicher Breite b₁, b₂ getrennt. Die erste Umfangsrille 6 ist im Bereich B der einen Gürtelkante 10, die zweite Umfangsrille 7 im Bereich B der anderen Gürtelkante 11 und die dritte Umfangsrille 8 ist mittig im Laufstreifen 1 angeordnet. Die Umfangsrillen 6, 7, 8 weisen an der Laufstreifenperipherie in Umfangsrichtung geradlinig und parallel zueinander verlaufende Randkanten 4 auf. Die erste und die zweite Umfangsrille 6, 7 schließen ein Rillenvolumen (V_{R1,2}) von je 1,75% in Bezug auf das Laufstreifen-Bruttovolumen (V) ein. Die dritte Umfangsrille schließt ein Rillenvolumen (V_{R3})von 10,5% in Bezug auf das Laufstreifen-Bruttovolumen (V) ein. Die maximale Tiefe t-betrachtet in radialer Richtung - der Umfangsrillen 6, 7, 8, die bei der gezeigten Ausführung für sämtliche Umfangsrillen gleich groß gewählt ist, beträgt zwischen 10 mm und 25 mm, hier 15mm. Parallel zur axialen Außenkontur der Laufstreifenperipherie ist analog zu Fig.1 eine Hilfslinie h eingezeichnet, welche die Umfangsrillen 6, 7, 8 an ihren radial inneren Enden berührt und derart im Querschnitt eine parallel zur Laufstreifenperipherie in Umfangsrichtung innerhalb des Laufstreifens 1 umlaufende Einhüllende versinnbildlicht.

Die durch die Hilfslinie h versinnbildlichte Einhüllende, die Laufstreifenperipherie und die schulterseitigen Flankenabschnitte 5 des Laufstreifens 1 umschließen ein Bruttovolumen V ein, welches die Summe des hier befindlichen Gummivolumens und des Rillenvolumens V_{R} ist, welches seinerseits die Summe der "Luftvolumina" sämtlicher Umfangsrillen 6, 7, 8 -zwischen den Rillenbegrenzungen und einer Einhüllenden der Laufstreifenperipherie ermittelt- ist. Bei dem ausgeführten Reifen beträgt der Anteil des Rillenvolumens V_{R} am Bruttovolumen V 14%. Durch die geringe Anzahl von nur drei unterschiedlich breiten Umfangsrillen 6, 7, 8 sind nur sechs Rillenflanken ausgebildet.

Die **Fig.3** zeigt einen Querschnitt durch den Laufstreifen eines erfindungsgemäß ausgeführten Nutzfahrzeugreifens. Der Laufstreifen ist wie der in Fig.2 gezeigte Laufstreifen aufgebaut, jedoch weist der Nutzfahrzeugreifen der Fig.3 zusätzlich axial innen und axial außen im Laufstreifen 1 um den Umfang umlaufende, nutartige Ausnehmungen 9 auf, die derart ausgebildet sind, dass die axiale Breite der Bodenaufstandsfläche verringert ist.

Die nachfolgende Tabelle gibt Rollwiderstände von einem Referenzreifen und von zwei erfindungsgemäß ausgeführten Reifen, Reifen1 und Reifen 2, wieder.

**Tabelle**

| | Profiltiefe (in mm) | Rillenvolumen (in %) | Anzahl der Rillen | Volumen der Umfangsrillen (in %) | Rollwiderstand (in %) nach ISO 28580 |
|---|---|---|---|---|---|
| Referenzreifen | 15 | 14 | 4 | je 3,5 | 100 |
| Reifen 1 | 15 | 14 | 3 | Dritte Rille (Mittelrille): 10,5 Erste u. zweite Rille (äußere Rillen): je1,75 | 94 |
| Reifen 2 | 15 | 14 | 3 | Dritte Rille (Mittelrille): 7,0 Erste u. zweite Rille (äußere Rillen): je 3,5 | 98 |

Der Referenzreifen ist der in der Fig.1 gezeigte und entsprechend beschriebene Nutzfahrzeugreifen. Der Rollwiderstand des Referenzreifens beträgt 100%.

Der Reifen 1 ist der in der Fig.2 gezeigte und entsprechend beschriebene Nutzfahrzeugreifen. Der Rollwiderstand des Reifens 1 ist gegenüber dem Rollwiderstand des Referenzreifens um 6% reduziert.

Der Reifen 2 weist ein Rillenvolumen V_{R} von 14% zum Bruttovolumen V des Laufstreifens auf Die Anzahl der Umfangsrillen des Laufstreifens beträgt drei, wovon je eine Umfangsrille im Bereich der Kanten der breitesten Gürtellage angeordnet ist und je ein Volumen V_{R1,2} von 3,5% haben. Die dritte Umfangsrille ist axial mittig im Laufstreifen angeordnet und weist ein Volumen von 7% auf. Der Rollwiderstand beträgt 98% und ist somit um 2% gegenüber dem Referenzreifen verbessert.

Der Begriff "Umfangsrille" meint Umfangsrillen, die ein Rillenvolumen von jeweils mindestens 1,25% aufweisen. Der Laufstreifen kann erfindungsgemäß weitere Rillen, wie beispielsweise weitere Umfangsrillen mit einem Rillenvolumen von unter 1,25% oder beliebig viele und beliebig breite Querrillen aufweisen.

### Bezugszeichenliste

- 1: Laufstreifen
- 2: Umfangsrippe
- 3: breite Umfangsrille
- 4: Randkante
- 5: Flankenabschnitt
- 6: erste Umfangsrille
- 7: zweite Umfangsrille
- 8: dritte Umfangsrille
- 9: nutartige Ausnehmung
- 10: eine Gürtelkante
- 11: andere Gürtelkante
- 12: Rillenflanke

- b₁: Breite
- b₂: Breite
- h: Hilfslinie
- t: Tiefe
- B: Bereich

- V: Bruttovolumen
- V_{R}: Rillenvolumen
- V_{R1}: Rillenvolumen der ersten Umfangsrille
- V_{R2}: Rillenvolumen der zweiten Umfangsrille
- V_{R3}: Rillenvolumen der dritten Umfangsrille

## Patentansprüche

1. Fahrzeugluftreifen für Nutzfahrzeuge
mit einem mehrere Gürtellagen aufweisenden Gürtel und mit einem Laufstreifen (1) mit in Umfangsrichtung verlaufenden Umfangsrillen (6,7,8), welche den Laufstreifen (1) in Umfangsrippen (2) gliedern, wobei eine parallel zur Laufstreifenperipherie im Laufstreifen (1) verlaufende, die tiefste(n) Umfangsrille(n) von radial innen berührende Einhüllende h gemeinsam mit der Laufstreifenperipherie und den schulterseitigen Flankenabschnitten (5) ein Laufstreifen-Bruttovolumen (V) definiert, wobei sämtliche Rillen (6,7,8) im Laufstreifen (1) ein Rillenvolumen (V_{R}) zwischen 5% und 28% des Laufstreifen-Bruttovolumens (V) definieren,
wobei drei Umfangsrillen (6,7,8) vorgesehen sind, die derart über die axiale Breite des Laufstreifens (1) angeordnet sind, dass die erste Umfangsrille (6) im Bereich (B) der einen Kante (10) der breitesten Gürtellage, die zweite Umfangsrille (7) im Bereich (B) der anderen Kante (11) der breitesten Gürtellage des Gürtels und die dritte Umfangsrille (8) zwischen der ersten Umfangsrille (6) und der zweiten Umfangsrille (7) im Laufstreifen (1) angeordnet ist und wobei die erste und die zweite Umfangsrille (6,7) jeweils ein Rillenvolumen (V_{R1,2}) zwischen 1,25% und 7,00% des Laufstreifen-Bruttovolumens (V) aufweisen und die dritte Umfangsrille (8) ein wenigstens doppelt so großes Rillenvolumen (V_{R3}) der ersten oder der zweiten Umfangsrille aufweist, **dadurch gekennzeichnet, dass**
der Laufstreifen (1) axial innen und axial außen je eine weitere über den Umfang umlaufende nutartige Ausnehmung (9) aufweist, die derart angeordnet sind, dass die Breite der Bodenaufstandsfläche in axialer Richtung verringert ist.

2. Fahrzeugluftreifen nach Anspruch 1, **dadurch gekennzeichnet, dass** der Anteil des Rillenvolumens (V_{R}) am Bruttovolumen (V) zwischen 10% und 20% beträgt.

3. Fahrzeugluftreifen nach Anspruch 1, **dadurch gekennzeichnet, dass** der Anteil des Rillenvolumens (V_{R}) am Bruttovolumen (V) zwischen 13% und 15% beträgt.

4. Fahrzeugluftreifen nach einem der Ansprüche 1 bis 3, **dadurch gekennzeichnet, dass** die dritte Umfangsrille (8) ein Rillenvolumen (V_{R3}) aufweist, das wenigstens dem dreifachen Volumen (V_{R1}) der ersten Umfangsrille (6) entspricht.

5. Fahrzeugluftreifen nach einem der Ansprüche 1 bis 3, **dadurch gekennzeichnet, dass** die dritte Umfangsrille (8) ein Rillenvolumen (V_{R3}) aufweist, das wenigstens dem vierfachen Rillenvolumen (V_{R1}) der ersten Umfangsrille (6) entspricht.

6. Fahrzeugluftreifen nach einem der Ansprüche 1 bis 3, **dadurch gekennzeichnet, dass** die dritte Umfangsrille (8) ein Rillenvolumen (V_{R3}) aufweist, das wenigstens dem fünffachen Rillenvolumen (V_{R1}) der ersten Umfangsrille (6) entspricht.

7. Fahrzeugluftreifen nach einem oder mehreren der Ansprüche 1 bis 6, **dadurch gekennzeichnet, dass** die Rillentiefe (t) einer Umfangsrille, vorzugsweise jeder Umfangsrille, zwischen 10mm und 25mm beträgt, wobei die Tiefe der einzelnen Rillen einheitlich oder unterschiedlich sein kann.

8. Fahrzeugluftreifen nach einem oder mehreren der Ansprüche 1 bis 7, **dadurch gekennzeichnet, dass** wenigstens eine Umfangsrille (6, 7, 8) eine Zick-zack-Geometrie mit in axialer Richtung ausgelenkten Amplituden aufweist.

9. Fahrzeugluftreifen nach einem oder mehreren der Ansprüche 1 bis 8, **dadurch gekennzeichnet, dass** wenigstens eine Umfangsrille Rillenflanken aufweist, welche mit vorspringenden Gestaltungselementen, beispielsweise Erhebungen, Schrägflächen und dergleichen versehen sind.

## Claims

1. Pneumatic vehicle tyre for commercial vehicles with a breaker belt having multiple belt plies and with a tread rubber (1) with circumferential grooves (6, 7, 8), which run in the circumferential direction and divide the tread rubber (1) into circumferential ribs (2), an envelope h that runs in the tread rubber (1) parallel to the periphery of the tread rubber and is in contact with the deepest circumferential groove(s) radially from the inside acting together with the periphery of the tread rubber and the shoulder-side flank portions (5) to define a gross tread rubber volume (V), all of the grooves (6, 7, 8) in the tread rubber (1) defining a groove volume (V_{R}) of between 5% and 28% of the gross tread rubber volume (V),
three circumferential grooves (6, 7, 8) being provided, arranged in such a way over the axial width of the tread rubber (1) that the first circumferential groove (6) is arranged in the region (B) of the one edge (10) of the widest belt ply, the second circumferential groove (7) is arranged in the region (B) of the other edge (11) of the widest belt ply of the breaker belt and the third circumferential groove (8) is arranged between the first circumferential groove (6) and the second circumferential groove (7) in the tread rubber (1), and the first and second circumferential grooves (6, 7) respectively having a groove volume (V_{R1,2}) of between 1.25% and 7.00% of the gross tread rubber volume (V) and the third circumferential groove (8) having a groove volume (V_{R3}) at least twice as great as the first or the second circumferential groove,
**characterized in that**
the tread rubber (1) has axially on the inside and axially on the outside in each case a further groove-like recess (9), which recesses run over the circumference and are arranged in such a way that the width of the ground contact area in the axial direction is reduced.

2. Pneumatic vehicle tyre according to Claim 1, **characterized in that** the groove volume (V_{R}) as a proportion of the gross volume (V) is between 10% and 20%.

3. Pneumatic vehicle tyre according to Claim 1, **characterized in that** the groove volume (V_{R}) as a proportion of the gross volume (V) is between 13% and 15%.

4. Pneumatic vehicle tyre according to one of Claims 1 to 3, **characterized in that** the third circumferential groove (8) has a groove volume (V_{R3}) that corresponds to at least three times the volume (V_{R1}) of the first circumferential groove (6).

5. Pneumatic vehicle tyre according to one of Claims 1 to 3, **characterized in that** the third circumferential groove (8) has a groove volume (V_{R3}) that corresponds to at least four times the groove volume (V_{R1}) of the first circumferential groove (6).

6. Pneumatic vehicle tyre according to one of Claims 1 to 3, **characterized in that** the third circumferential groove (8) has a groove volume (V_{R3}) that corresponds to at least five times the groove volume (V_{R1}) of the first circumferential groove (6).

7. Pneumatic vehicle tyre according to one or more of Claims 1 to 6, **characterized in that** the groove depth (t) of a circumferential groove, preferably each circumferential groove, is between 10 mm and 25 mm, it being possible for the depth of the individual grooves to be the same or different.

8. Pneumatic vehicle tyre according to one or more of Claims 1 to 7, **characterized in that** at least one circumferential groove (6, 7, 8) has a zigzag geometry with amplitudes deflected in the axial direction.

9. Pneumatic vehicle tyre according to one or more of Claims 1 to 8, **characterized in that** at least one circumferential groove has groove flanks that are provided with projecting design elements, for example elevations, sloping surfaces and the like.

## Revendications

1. Bandage pneumatique pour roue de véhicule utilitaire, présentant
une ceinture dotée de plusieurs couches de ceinture et une bande de roulement (1) dotée de rainures périphériques (6, 7, 8) s'étendant dans la direction périphérique et divisant la bande de roulement (1) en nervures périphériques (2),
une enveloppante h s'étendant parallèlement à la périphérie de la bande de roulement (1) et touchant le côté radial intérieur de la ou des rainures périphériques les plus profondes définissant avec la périphérie de la bande de roulement et les parties de flanc (5) côté épaulement un volume brut (V) de bande de roulement,
toutes les rainures (6, 7, 8) définissant dans la bande de roulement (1) un volume de rainure (V_{R}) qui représente entre 5 % et 28 % du volume brut (V) de la bande de roulement,
trois rainures périphériques (6, 7, 8) étant prévues et disposées sur la largeur axiale de la bande de roulement (1), avec la première rainure périphérique (6) dans la partie (B) d'un des bords (10) de la couche de ceinture la plus large, la deuxième rainure périphérique (7) dans la partie (B) de l'autre bord (11) de la couche la plus large de ceinture et la troisième rainure périphérique (8) dans la bande de roulement (1) entre la première rainure périphérique (6) et la deuxième rainure périphérique (7),
la première et la deuxième rainure périphérique (6, 7) présentant chacune un volume de rainure (V_{R1,2}) qui représente entre 1,25 % et 7,00 % du volume brut (V) de la bande de roulement et la troisième rainure périphérique (8) présentant un volume de rainure (V_{R3}) qui représente au moins le double de celui de la première ou de la deuxième rainure périphérique, **caractérisé en ce que**
la bande de roulement (1) présente du côté axial intérieur et du côté axial extérieur une découpe (9) en forme de sillon s'étendant sur la périphérie et disposée de telle sorte que la largeur de la surface d'appui au sol soit diminuée dans la direction axiale.

2. Bandage pneumatique pour roue de véhicule selon la revendication 1, **caractérisé en ce que** le volume de rainure (V_{R}) représente entre 10 % et 20 % du volume brut (V).

3. Bandage pneumatique pour roue de véhicule selon la revendication 1, **caractérisé en ce que** le volume de rainure (V_{R}) représente entre 13 % et 15% du volume brut (V).

4. Bandage pneumatique pour roue de véhicule selon l'une des revendications 1 à 3, **caractérisé en ce que** la troisième rainure périphérique (8) présente un volume de rainure (V_{R3}) qui correspond au moins à trois fois le volume (V_{R1}) de la première rainure périphérique (6).

5. Bandage pneumatique pour roue de véhicule selon l'une des revendications 1 à 3, **caractérisé en ce que** la troisième rainure périphérique (8) présente un volume de rainure (V_{R3}) qui correspond au moins à quatre fois le volume de rainure (V_{R1}) de la première rainure périphérique (6).

6. Bandage pneumatique pour roue de véhicule selon l'une des revendications 1 à 3, **caractérisé en ce que** la troisième rainure périphérique (8) présente un volume de rainure (V_{R3}) qui correspond au moins à cinq fois le volume de rainure (V_{R1}) de la première rainure périphérique (6).

7. Bandage pneumatique pour roue de véhicule selon l'une des revendications 1 à 6, **caractérisé en ce que** la profondeur (t) d'une rainure périphérique et de préférence de chaque rainure périphérique est comprise entre 10 mm et 25 mm, les différentes rainures pouvant avoir la même profondeur ou des profondeurs différentes.

8. Bandage pneumatique pour roue de véhicule selon l'une des revendications 1 à 7, **caractérisé en ce qu'**au moins une rainure périphérique (6, 7, 8) présente une géométrie en zigzag dont l'amplitude s'étend dans la direction axiale.

9. Bandage pneumatique pour roue de véhicule selon l'une des revendications 1 à 8, **caractérisé en ce qu'**au moins une rainure périphérique présente des flancs dotés d'éléments de forme en saillie, par exemple des reliefs, des surfaces obliques et similaires.
